Europäisches Patentamt

European Patent Office

Office européen des brevets

(19)

(11) Veröffentlichungsnummer: **0 099 449**
**B1**

(12) # EUROPÄISCHE PATENTSCHRIFT

(45) Veröffentlichungstag der Patentschrift:
04.12.85

(21) Anmeldenummer: 83104068.8

(22) Anmeldetag: 26.04.83

(51) Int. Cl.⁴: **F 27 B 7/26, F 26 B 11/04**

(54) **Vorrichtung zur Abdichtung eines Zahnkranzes.**

(30) Priorität: 23.06.82 DE 3223444

(43) Veröffentlichungstag der Anmeldung:
01.02.84 Patentblatt 84/5

(45) Bekanntmachung des Hinweises auf die Patenterteilung:
04.12.85 Patentblatt 85/49

(84) Benannte Vertragsstaaten:
**BE DE FR GB**

(56) Entgegenhaltungen:
**GB - A - 597 756**
**US - A - 2 606 081**
**US - A - 4 300 292**

(73) Patentinhaber: **Krupp Polysius AG,
Graf-Galen-Strasse 17, D-4720 Beckum (DE)**

(72) Erfinder: **Grachtrup, Heinz, Dipl.-Ing., Mellauer
Strasse 1, D-4722 Ennigerloh (DE)**

(74) Vertreter: **Tetzner, Volkmar, Dr.-Ing. Dr. Jur.,
Van-Gogh-Strasse 3, D-8000 München 71 (DE)**

**Beschreibung**

Die Erfindung betrifft eine Vorrichtung zur Abdichtung eines Zahnkranzes, der durch ein in ein Ölbad eintauchendes Ritzel angetrieben ist.

Große rotierende Maschinenteile, insbesondere drehende Trommeln, wie Drehrohröfen, Rohrmühlen, Trockentrommeln und dgl., werden überwiegend über am Außenumfang befestigte Zahnkränze und damit in Eingriff stehende Ritzel angetrieben, die ihrerseits Teil eines Antriebes sind. Von dem im Ölbad laufenden Antriebsritzel wird ein Anteil des Schmieröles auch auf die Zähne des Zahnkranzes übertragen. Während ein Teil des übertragenen Öles etwa in der jeweils unten befindlichen Hälfte des Zahnkranzes wieder von den Zähnen abtropft und in das Ölbad zurückfließen kann, wird der übrige Teil des Öles mit den Zähnen des Zahnkranzes in den Bereich oberhalb der Zahnkranz-Drehachse mitgenommen. Hier besteht dann die Gefahr, daß das Öl entlang des Zahnkranzkörpers bis hin zum Mantel des Dehrohrofens abfließt, wodurch nicht nur größere Ölverluste (durch Verdampfung) entstehen können, sondern in Folge der relativ hohen Manteltemperatur (im Störfall sogar bis ca. 400° C) eine erhebliche Brandgefahr auftreten kann.

Aus den erläuterten Gründen ist man bestrebt, im Bereich des Zahnkranzes entsprechende Abdichtungsvorrichtungen anzubringen, die das erläuterte Abfließen des mitgenommenen Öles in Richtung des Zahnkranzkörpers bzw. Drehrohrofenmantels verhindern sollen.

Bei einer aus der Praxis bekannten Ausführungsform, die insbesondere für die Abdichtung eines auf einem Drehrohrofenmantel befestigten Zahnkranzes bestimmt ist, sind im Bereich der Zahnkranz-Stirnseiten kreiszylindrische Ringe vorgesehen,die von ortsfesten Blechstreifen zumindest teilweise umgeben sind. Während des Betriebes gleitet der kreiszylindrische Ring an den Blechstreifen entlang und bildet mit diesem die eigentliche Abdichtung. Hier ist nun jedoch zu berücksichtigen, daß bei umlaufenden Trommeln stets Rundlauffehler (Höhen- und Taumelschläge), Axialbewegungen des Zahnkranzes sowie durch thermische Beanspruchungen bedingte Änderungen auftreten können, was bei Drehrohröfen besonders stark zum Ausdruck kommt. Selbst wenn die genannten Fehler und Bewegungen sich z. T. elastisch ausgleichen lassen, so ist es doch nicht zu vermeiden, daß aufgrund der gegebenen Relativ-Drehbewegungen der wesentlichen Dichtungselemente unkontrollierte Schmierverhältnisse auftreten, die zu einem unerwünscht starken Verschleiß führen.

Bei einer weiteren bekannten Ausführung (GB-A-597 756) befinden sich der Zahnkranz, das antreibende Ritzel, die Lagerschuhe und das Ölbad in einem feststehenden Gehäuse, das dem Zwecke dient, den Zutritt von Staub und sonstigen Fremdkörpern zum Antriebsmechanismus zu verhindern. Dieses Gehäuse ist an seinem Rand, der mit dem Trommelmantel in Berührung steht, mit Dichtungselementen versehen.

Zum Stand der Technik gehört weiterhin eine Drehtrommel (US-A-4 300 292), bei der das Zahnrad und die Antriebsritzel von einem feststehenden Gehäuse umgeben sind, das mit einem Druckluftanschluß sowie mit Heizelementen versehen ist. Durch Beheizung der in dem Gehäuse enthaltenen Luft und durch die damit bewirkte Erwärmung des Zahnkranzes sollen unerwünschte thermische Spannungen zwischen dem Zahnkranz und dem Mantel der Drehtrommel verhindert werden. Das Gehäuse ist dabei durch Labyrinthdichtungen gegenüber dem Trommelmantel abgedichtet.

Der Erfindung liegt daher die Aufgabe zugrunde, eine Abdichtungsvorrichtung der eingangs genannten Art zu schaffen, die auch bei den erläuterten Rundlauffehlern, Axialbewegungen und thermischen Belastungen, wie es insbesondere bei Drehrohröfen und ähnlichen Drehtrommeln der Fall ist, eine zuverlässige und dauerhafte Abdichtung bei relativ einfachem konstruktivem Aufbau gewährleistet.

Diese Aufgabe wird erfindungsgemäß durch folgende Merkmale gelöst:

a)  Mit den beiden Stirnseiten des Zahnkranzes ist je ein Konus verbunden, der sich nach seiner dem Zahnkranz abgewandten Seite hin verjüngt;

b)  auf jedem Konus ist ein Dichtungsring so angeordnet, daß sich zwischen diesem Dichtungsring und der benachbarten Stirnseite des Zahnkranzes ein das Öl in das Ölbad zurückführender, ringförmiger Ölsammelraum ergibt.

Bei dieser erfindungsgemäßen Ausführungsform wird durch die an beiden Stirnseiten des Zahnkanzes vorgesehenen Konen zunächst einmal dafür gesorgt, daß das von den Zähnen des Zahnkranzes mitgeführte Öl insbesondere im jeweils oberhalb der Zahnkranz-Drehachse befindlichen Abschnitt vom Zahnkranzkörper weggeleitet wird. Durch die Anordnung des Dichtungsringes auf jedem Konus wird das entlang der Außenseite des Konus abfließende Öl daran gehindert, auf den Mantel des Drehrohrofens abzufließen. Die Ausbildung des ringförmigen Ölsammelraumes gewährleistet vielmehr eine zuverlässige Rückführung des von den Zähnen abgelaufenen Öles zurück in das Ölbad. Die konstruktiv relativ einfache Zusammenordnung jedes Konus mit zugehörigem Dichtungsring vermeidet dabei ferner alle Probleme, die bei der oben erläuterten bekannten Abdichtungsvorrichtung durch Rundlauffehler, Axialbewegung des Zahnkranzes und thermische Belastungen auftreten können.

Weitere Einzelheiten und Vorteile der Erfindung ergeben sich aus den Unteransprüchen sowie aus der folgenden Beschreibung eines in der Zeichnung veranschaulichten Ausführungsbeispiels. In dieser Zeichnung zeigt

Fig. 1 eine vereinfachte Querschnittsansicht durch ein Drehrohr im Bereich des darauf angeordneten Zahnkranzes,

Fig. 2 eine Seitenansicht auf diesen Drehrohr-Längsabschnitt, insbesondere auf den Zahnkranz,

Fig. 3a und 3b Teil-Querschnittsansichten durch den Zahnkranz, und zwar einerseits im Bereich des obersten Umfangsabschnittes und andererseits im Bereich des untersten Umfangsabschnittes, entsprechend Schnittlinien IIIa-IIIa bzw. IIIb-IIIb in Fig. 1.

Es sei angenommen, daß der Zahnkranz 1 auf dem Mantel 2 eines Drehrohrofens 3 in üblicher Weise befestigt ist.

Die Zähne 1a des Zahnkranzes 1 kommen mit den Zähnen 4a eines Antriebsritzels 4 in Eingriff, das in bekannter Weise Teil eines nicht näher veranschaulichten Antriebes ist und in ein Ölbad 5 eintaucht, das sich in einem Ölsammelraum befindet, der in einer Ölwanne 6 ausgebildet ist.

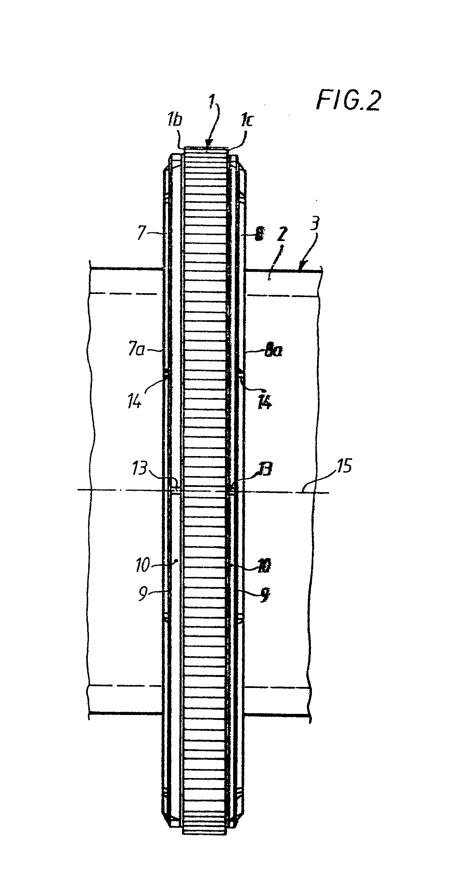

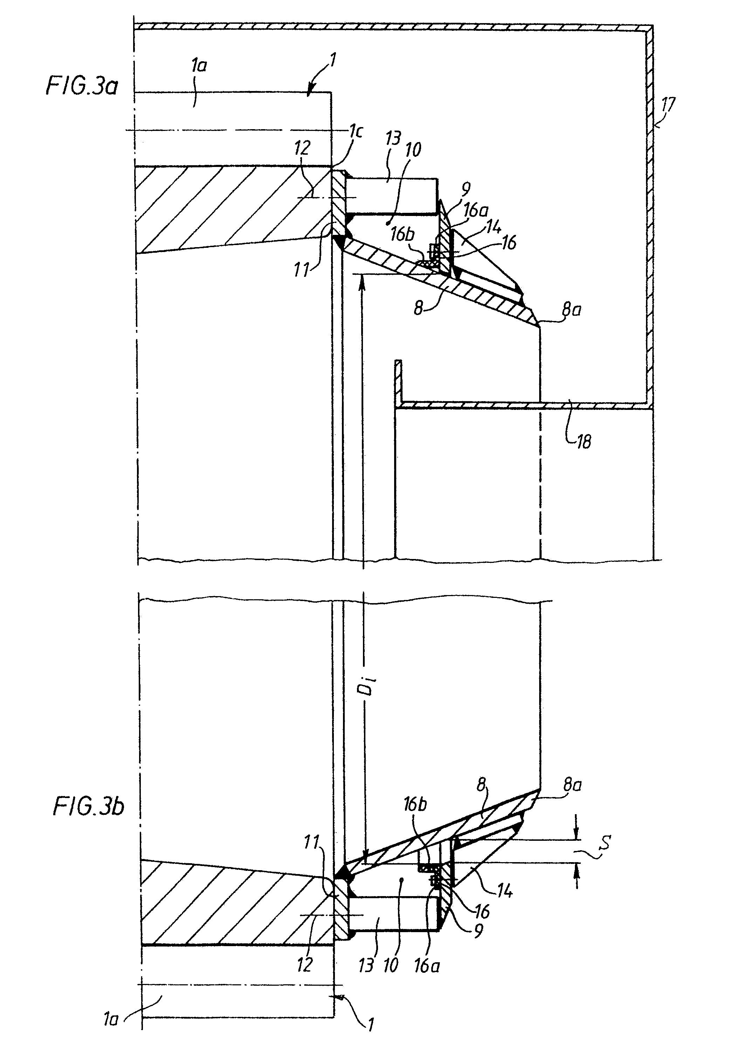

An jeder Stirnseite 1b, 1c des Zahnkranzes 1 ist ein Konus 7 bzw. 8 befestigt, beispielsweise angeschraubt, der sich nach seiner dem Zahnkranz 1 abgewandten Seite 7a, 8a hin verjüngt. Auf jedem Konus 7, 8 ist — vgl. Fig. 2 und 3a/3b — ein Dichtungsring 9 lose angeordnet. Diese Anordnung ist dabei so gewählt, daß sich zwischen dem Dichtungsring 9 und der benachbarten Stirnseite 1b bzw. 1c des Zahnkranzes 1 ein ringförmiger Ölsammelraum 10 ergibt, durch den Öl, das von den Zähnen 1a des Zahnkranzes 1 mit nach oben genommen worden ist, in das Ölbad 5 zurückgeführt werden kann.

Die beiden Konen 7, 8 sind gleichartig aufgebaut und in entsprechender Weise mit der zugehörigen Zahnkranz-Stirnseite verbunden. Für die nähere Erläuterung über Form, Aufbau und Zusammenordnung von Zahnkranz, Konus und Dichtungsring sei daher im folgenden lediglich auf die an der Zahnkranz-Stirnseite 1c angebrachten Teile mit Konus 8 eingegangen, entsprechend der Darstellungen in den Fig. 3a/3b.

Der Konus 8 weist auf der Seite seines größten Durchmessers einen Ringflansch 11 auf, mit dem er an der zugehörigen Stirnseite 1c des Zahnkranzes 1 angeschraubt ist, wie bei 12 angedeutet ist.

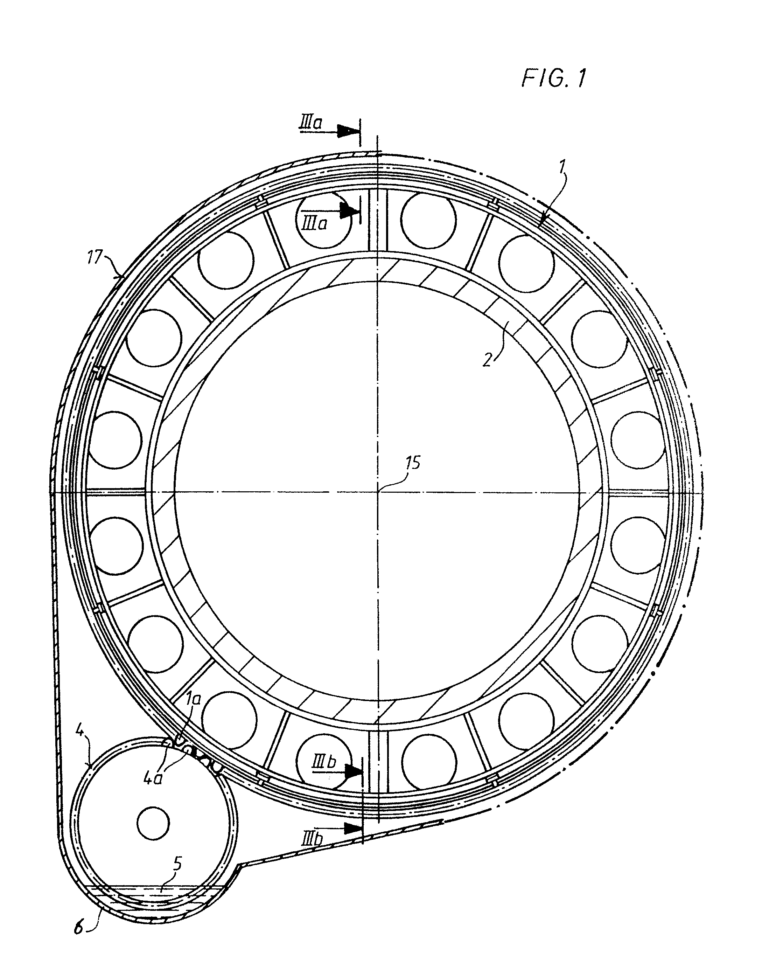

Der auf der Außenseite des Konus 8 bzw. jedes Konus 7, 8 lose angeordnete Dichtungsring 9 ist in seinem lichten Innendurchmesser $D_i$ etwas größer gehalten als der Außendurchmesser des Konus 8 an der Stelle, an der der Dichtungsring 9 auf diesem Konus sitzt. Dies bedeutet, daß der Dichtungsring 9 im oberen Umfangsbereich sich jeweils auf der Außenseite des Konus 8 abstützt (vgl. Fig. 3a), während er im unteren Umfangsbereich zwischen sich und der Außenseite des Konus 8 einen Spalt S freiläßt, der groß genug ist, damit evtl. auf den Außenumfangsabschnitt des Konus 8 außerhalb des Ölsammelraumes 10 gelangtes Öl ungehindert nach innen zurückfließen kann. Damit nun der lose angeordnete Dichtungsring 9 gegenüber einem Herabgleiten vom Konus 8 in axialer Richtung gesichert ist, sind zu beiden Stirnseiten des Dichtungsrings 9 je eine Anzahl von über den Umfang verteilten Abstandselementen 13 bzw. 14 auf dem Konus 8 befestigt. In der dargestellten Ausführungsform sind einerseits an dem Ringflansch 11 axial gegen den Dichtungsring 9 vorstehende, zapfenartige Abstandselemente befestigt, während andererseits — auf der gegenüberliegenden Stirnseite des Dichtungsringes 9 — etwa hochkant stehende Abstandselemente 14 (etwa in Form von Abstandsblechen) direkt auf der entsprechenden Außenumfangsseite des Konus 8 befestigt sind. Diese Abstandselemente 13, 14 wirken so mit dem Dichtungsring 9 bzw. dessen Stirnseiten zusammen, daß der Dichtungsring in radialer Richtung begrenzt beweglich, in axialer Richtung jedoch gegenüber einem Herabgleiten vom Konus 8 gesichert ist. Jeder Konusring 9 ist daher im wesentlichen in einer Ebene ausgerichtet, die senkrecht zur Drehachse 15 (vgl. Fig. 1 und 2) verläuft.

Im Bereich seines Innenumfangs trägt jeder Dichtungsring 9 eine ringförmige Dichtungslippe 16. Diese Dichtungslippe 16, die aus einem geeigneten, flexiblen Material (Gummi oder gummiartiger Kunststoff) hergestellt ist, besitzt die Querschnittsform eines Winkels, dessen einer Schenkel 16a flach an der, dem Zahnkranz 1 zugewandten Stirnseite des Dichtungsringes 9 anliegt und damit verschraubt ist, während der andere Schenkel 16b etwa axial gegen die ihm zugewandte Zahnkranz-Stirnseite 1c gerichtet ist und im jeweils oberhalb der Zahnkranz-Drehachse 15 befindlichen Umfangsbereich dichtend an der Außenseite des Konus 8 anliegt; zumindest im untersten Umfangsbereich des Dichtungsringes 9 weist der Schenkel 16b der Dichtungslippe 16 dann einen entsprechenden Spaltabstand von der Konusaußenseite auf.

Mit Bezugnahme auf die Fig. 1 und 3a sei eine zweckmäßige Weiterbildung der Abdichtungsvorrichtung für den Zahnkranz 1 erläutert. Der Zahnkranz 1 sowie die an seinen beiden Stirnseiten 1b und 1c befestigten Konen 7, 8 (einschließlich Dichtungsringe 9) sind über den größten Teil des Umfangs von einer ortsfesten Schutzhaube 17 umgeben. Diese Schutzhaube 17 ist in ihrem unteren Bereich mit der Ölwanne 6 verbunden oder sie ist in ihrem unteren Bereich gleichzeitig als Ölwanne 6 ausgebildet. Zusammen mit der Ölwanne 6 umgibt die Schutzhaube 17 somit praktisch vollkommen den Zahnkranz ein, wie in Fig. 1 z. T. als Schnittdarstellung und z. T. rein schematisch (strichpunktiert) angedeutet ist.

In Fig. 3a ist darüber hinaus gezeigt, daß es vorteilhaft ist, die Schutzhaube 17 zumindest im oberen Bereich, d. h. im Bereich der jeweils oberhalb der Zahnkranz-Drehachse 15 befindlichen Zahnkranzhälfte so auszubilden, daß sie die Konen (vgl. Konus 8) von außen her untergreift und dabei in ihren untergreifenden Abschnitten (vgl. Abschnitt 18 in Fig. 3a) etwa rinnenartig gestaltet ist. Ein solcher rinnenartiger Abschnitt 18 greift dabei stirnseitig und axial in den Innenumfangsbereich des zugehörigen Konus 8 ein, wobei dieser rinnenartige Abschnitt 18 mit ausreichendem Abschnitt gegen den Konus 8 (insbesondere auch gegenüber dessen Seite 8a mit kleinstem Durchmesser) geöffnet ist.

Die geschilderte Ausbildung und Anordnung der Schutzhaube 17 kann damit mehrere Funktionen gleichzeitig erfüllen:

— Sie schützt den Zahnkranz 1 gegenüber äußeren Verschmutzungen;
— sie führt vom ringförmigen Ölsammelraum 10 nach außen vom Zahnkranz 1 ablaufendes Öl in das Ölbad 5 zurück;
— falls der Dichtungsring 9 bzw. dessen Dichtungslippe 16 tatsächlich einmal undicht werden sollten, dann wird ggfs. von der Konusseite 8a mit kleinstem Durchmesser abtropfendes Öl von den rinnenförmigen Abschnitten 18 aufgefangen und ebenfalls zum Ölbad zurückgeleitet, ohne daß dieses Öl verlorengeht oder auf den heißen Ofenmantel gelangen kann.

Zur Darstellung der Fig. 3b sei noch betont, daß auch der hier veranschaulichte untere Zahnkranzabschnitt von der Schutzhaube 17 umschlossen ist, diese jedoch aus Gründen der klareren Darstellung der hier gezeigten Teile weggelassen worden ist.

Zum Schluß sei noch erwähnt, daß die erfindungsgemäße Zahnkranz-Abdichtungsvorrichtung in der Zusammenordnung mit einem Drehrohrofen erläutert worden ist, weil hier die speziellen Vorteile der Erfindung besonders deutlich in Erscheinung treten. Selbstverständlich kann die erfindungsgemäße Abdichtungsvorrichtung auch in gleichartiger Weise bei anderen rotierenden Maschinenteilen verwendet werden, insbesondere bei den Drehtrommeln von Trommelmühlen, Trocken- oder Kühltrommeln und dgl.

**Patentansprüche**

1. Vorrichtung zur Abdichtung eines Zahnkranzes, der durch ein in ein Ölbad eintauchendes Ritzel angetrieben ist, gekennzeichnet durch folgende Merkmale:

a)  Mit den beiden Stirnseiten (1b, 1c) des Zahnkranzes 1 ist je ein Konus (7, 8) verbunden, der sich nach seiner dem Zahnkranz abgewandten Seite (7a, 8a) hin verjüngt;
b)  auf jedem Konus (7, 8) ist ein Dichtungsring (9) so angeordnet, daß sich zwischen diesem Dichtungsring und der benachbarten Stirnseite des Zahnkranzes (1) ein das Öl in das Ölbad (5) zurückführender, ringförmiger Ölsammelraum (10) ergibt.

2. Vorrichtung nach Anspruch 1, gekennzeichnet durch folgende weitere Merkmale:

c)  Der lichte Innendurchmesser ($D_i$) des Dichtungsringes (9) ist etwas größer als der Außendurchmesser des Konus (8) an der Stelle, an der der Dichtungsring (9) auf dem Konus (8) sitzt;
d)  der Dichtungsring (9) ist lose auf dem Konus (7, 8) angeordnet, wobei er in radialer Richtung begrenzt beweglich, in axialer Richtung jedoch gegen ein Herabgleiten vom Konus gesichert ist.

3. Vorrichtung nach Anspruch 2, dadurch gekennzeichnet, daß jeder Dichtungsring (9) im Bereich seines Innenumfangs sowie auf seiner dem Zahnkranz (1) zugewandten Stirnseite eine im wesentlichen axial gegen den Zahnkranz gerichtete, ringförmige Dichtungslippe (16) trägt, die im jeweils oberhalb der Zahnkranz-Drehachse (15) befindlichen Umfangsbereich dichtend an der Konusaußenseite anliegt.

4. Vorrichtung nach Anspruch 2, dadurch gekennzeichnet, daß mit beiden Stirnseiten des Dichtungsringes (9) je eine Anzahl von über den Umfang verteilt auf dem Konus (7, 8) befestigten Abstandselementen (13, 14) zusammenwirkt.

5. Vorrichtung nach den Ansprüchen 1 und 4, dadurch gekennzeichnet, daß jeder Konus (7, 8) auf der Seite seines größten Durchmessers einen Ringflansch (11) aufweist, mit dem er an der zugehörigen Stirnseite (1c) des Zahnkranzes (1) befestigt ist.

6. Vorrichtung nach wenigstens einem der vorhergehenden Ansprüche, dadurch gekennzeichnet, daß der Zahnkranz (1) sowie die an seinen beiden Stirnseiten (1b, 1c) befestigten Konen (7, 8) zumindest über den größten Teil des Umfangs von einer ortsfesten Schutzhaube (17) umgeben sind.

7. Vorrichtung nach Anspruch 6, dadurch gekennzeichnet, daß die Schutzhaube (17) in ihrem unteren Bereich mit einer Ölwanne (6) in Verbindung steht bzw. als Ölwanne (6) ausgebildet ist, die das Ölbad (5) für das Ritzel (4) enthält.

8. Vorrichtung nach Anspruch 6 und/oder 7, dadurch gekennzeichnet, daß die Schutzhaube (17) zumindest im Bereich der jeweils oben befindlichen Hälfte des Zahnkranzes (1) die Konen (7, 8) untergreift und dabei in ihren untergreifenden Abschnitten (18) etwa rinnenartig ausgebildet ist.

**Claims**

1. Device for sealing a ring gear which is driven by a pinion which dips into an oil bath, characterised by the following features:

a)  a cone (7, 8) which tapers towards its side (7a, 8a) facing away from the ring gear (1) is connected to each of the two end faces (1b, 1c) of the ring gear;
b)  a sealing ring (9) is arranged on each cone (7, 8) in such a way that an annular oil collecting chamber (10) which leads the oil back into the oil bath (5) is formed between the said sealing ring and the adjacent end face of the ring gear (1).

2. Device as claimed in claim 1, characterised by the following further features:

c)  the internal diameter ($D_i$) of the sealing ring (9) is somewhat greater than the external diameter of the cone (8) at the point at which the sealing ring (9) sits on the cone (8);

d)  the sealing ring (9) is arranged loosely on the cone (7, 8) so that it is capable of limited movement in the radial direction but is secured in the axial direction against sliding off of the cone.

3. Device as claimed in claim 2, characterised in that each sealing ring (9) has an annular sealing lip (16) which is directed essentially axially against the ring gear (1) in the region of its inner periphery and on its end face facing the ring gear (1), the said sealing lip resting so as to form a seal on the outer surface of the cone in the peripheral region located at that time above the axis of rotation (15) of the ring gear.

4. Device as claimed in claim 2, characterised in that a number of spacer elements (13, 14) distributed over the periphery are mounted on the cone (7, 8) and co-operate with both end faces of the sealing ring (9).

5. Device as claimed in claims 1 and 4, characterised in that on the side having the greatest diameter each cone (7, 8) has a ring flange (11) with which it is fixed to the appropriate end face (1c) of the ring gear (1).

6. Device as claimed in at least one of the preceding claims, characterised in that the ring gear (1) and the cones (7, 8) mounted on its two end faces (1b, 1c) are surrounded over the greater part of their periphery by a fixed protective cover (17).

7. Device as claimed in claim 6, characterised in that the protective cover (17) is connected in its lower region to the oil sump (6) or is constructed as an oil sump (6) which contains the oil bath (5) for the pinion (4).

8. Device as claimed in claims 6 and/or 7, characterised in that at least in the region of the half of the ring gear (1) located at the top at that time the protective cover (17) engages under the cones (7, 8) and is constructed approximately in channel form in its engaging sections (18).

## Revendications

1. Dispositif d'étanchéité pour couronne dentée que commande un pignon plongeant dans un bain d'huile, caractérisé par les particularités suivantes:

a)  un cône (7, 8) est relié à chacune des deux faces latérales (1b, 1c) de la couronne dentée 1 et se rétrécit vers le côté (7a, 8a) tourné à l'opposé de celui de la couronne;

b)  une bague d'étanchéité (9) est disposée sur chaque cône (7, 8) de manière qu'elle forme entre elle-même et la face latérale voisine de la couronne dentée (1) une chambre collectrice annulaire (10) qui ramène l'huile dans le bain (5).

2. Dispositif selon la revendication 1, caractérisé par les particularités suivantes:

c)  le diamètre interne de l'ouverture ($D_i$) de la bague d'étanchéité (9) est légèrement plus grand que le diamètre extérieur du cône (8) à l'emplacement auquel cette bague (9) repose sur ce cône (8);

d)  la bague d'étanchéité (9) repose librement sur le cône (7, 8) en ayant une liberté limitée de déplacement radial, mais en étant retenue en direction axiale de manière à être empêchée de glisser et de tomber du cône.

3. Dispositif selon la revendication 2, caractérisé en ce que chaque bague d'étanchéité (9) supporte au niveau de sa circonférence interne ainsi que sur sa face latérale tournée vers la couronne dentée (1) une lèvre annulaire d'étanchéité (16) orientée essentiellement en direction axiale vers la couronne dentée et appliquée de manière étanche sur le côté extérieur du cône dans la région de la circonférence se trouvant au-dessus de l'axe de rotation (15) de la couronne dentée.

4. Dispositif selon la revendication 2, caractérisé en ce que plusieurs éléments d'entretoisement (13, 14) répartis à la circonférence et fixés sur le cône (7, 8) coopèrent avec les deux faces latérales de la bague d'étanchéité (9).

5. Dispositif selon les revendications 1 et 4, caractérisé en ce que chaque cône (7, 8) comporte du côté de son diamètre le plus grand une bride annulaire (11) par laquelle il est fixé sur la face latérale correspondante (1c) de la couronne dentée (1).

6. Dispositif selon l'une au moins des revendications précédentes, caractérisé en ce qu'un capot fixe de protection (17) entoure la couronne dentée (1) ainsi que les cônes (7, 8) fixés sur les deux faces latérales (1b, 1c) de celle-ci au moins sur la majeure partie de la circonférence.

7. Dispositif selon la revendication 6, caractérisé en ce que la partie inférieure du capot de protection (17) est reliée à un auget à huile (6) ou est conformée en auget (6) contenant le bain d'huile (5) du pignon (4).

8. Dispositif selon la revendication 6 et/ou 7, caractérisé en ce que le capot de protection (17) passe au-dessous des cônes (7, 8) au moins dans la moitié de la couronne dentée (1) située momentanément à la partie supérieure, les parties (18) de ce capot se prolongeant sous les cônes étant conformées approximativement en gouttière.

FIG. 1

FIG.2

FIG.3a

FIG.3b